Europäisches Patentamt

European Patent Office

Office européen des brevets

(11) Numéro de publication: **0 176 376**
**A1**

## (12) DEMANDE DE BREVET EUROPEEN

(21) Numéro de dépôt: **85401532.8**

(22) Date de dépôt: **24.07.85**

(51) Int. Cl.⁴: **F 16 F 7/10**

(30) Priorité: **05.09.84 FR 8413657**

(43) Date de publication de la demande:
**02.04.86 Bulletin 86/14**

(84) Etats contractants désignés:
**DE GB IT**

(71) Demandeur: **BENDIX France**
**126, rue de Stalingrad**
**F-93700 Drancy(FR)**

(72) Inventeur: **Guidicelli, Charles**
**5, rue du Bon Vouloir Saint-Jean-du-Bois**
**F-72430 Noyen(FR)**

(74) Mandataire: **Le Moenner, Gabriel et al,**
**SERVICE BREVETS BENDIX 44, Rue François 1er**
**F-75008 Paris(FR)**

(54) **Dispositif amortisseur de vibrations pour commande mécanique.**

(57) Le dispositif amortisseur de vibrations est constitué d'un ensemble d'un corps pesant (1) présentant un passage central traversant (7) défini partiellement par un insert tubulaire (2) intégré au corps pesant, et d'un élément tubulaire élastique fendu longitudinalement (3), l'ensemble étant monté sur un tronçon non guidé (4) d'une commande mécanique avec l'élément tubulaire (3) interposé à force entre la périphérie externe du tronçon (4) et l'insert (2).

EP 0 176 376 A1

# DISPOSITIF AMORTISSEUR DE VIBRATIONS POUR COMMANDE MECANIQUE

La présente invention concerne les dispositifs amortisseurs de vibrations pour commande mécanique, notamment de véhicules automobiles, comportant un élément allongé transmetteur d'effort , tel qu'une tige de commande ou, plus généralement, un câble d'actionnement, entre un organe d'actionnement et un organe actionné, l'élément allongé transmetteur d'effort présentant au moins un tronçon non guidé (par exemple, pour un câble d'actionnement, un tronçon du câble s'étendant en dehors d'un conduit de gainage du câble).

On sait que les commandes mécaniques, du type à tige ou à câble, présentent, en particulier dans les véhicules automobiles, l'inconvénient de transmettre des vibrations,en provenance généralement du compartiment moteur et susceptiblesde se propager jusqu'à l'habitacle du véhicule, notamment jusqu'à la pédale constituant le plus souvent l'organe d'actionnement de la commande mécanique. On connaît, par exemple du document FR-A-2358290, des dispositifs amortisseurs de vibrations interposés entre deux tronçons successifs de la commande mécanique et présentant, outre les inconvénients afférents d'interruption de la ligne de commande mécanique proprement dite, des problèmes de tenue mécanique et de coût de fabrication.

La présente invention a pour objet de proposer un dispositif amortisseur de vibrations pour commande mécanique,particulièrement simple, de faible coût de fabrication, susceptible d'une grande variété de modes de réalisation convenant à des commandes mécaniques considérées dans divers environnements, ne nécessitant pas d'adaptation particulière de la commande mécanique proprement dite et notamment pas d'interruption de la ligne de transmission d'effort de cette commande mécanique.

Pour ce faire, selon une caractéristique de l'invention, le dispositif comprend un corps pesant, avantageusement en plomb ou en alliage de plomb, présentant un passage central traversant, défini partiellement par un insert tubulaire intégré au corps pesant, et un élément tubulaire élastique fendu longitudinalement, l'ensemble du dispositif amortisseur étant monté sur le tronçon non guidé de la commande mécanique en étant traversé par ce dernier, avec l'élément tubulaire élastique interposé à force entre la périphérie externe du tronçon et l'insert tubulaire.

Selon une autre caractéristique de l'invention, le passage central traversant comprend une partie formée dans le corps pesant et de dimension transversale intérieure supérieure au diamètre de l'alésage de l'insert.

Avec un tel agencement, le corps pesant, de masse et de dimensions déterminés, est rapporté, en y étant fermement solidarisé, sur une zone sélectionnée du tronçon non guidé de la commande mécanique de façon à modifier l'impédance in situ de cette dernière et à éliminer . nombre de fréquences indésirables susceptibles autrement d'être transmises par cette dernière jusqu'à l'habitacle du véhicule.

D'autres caractéristiques et avantages de la présente invention ressortiront de la description suivante d'un mode de réalisation, donné à titre illustratif mais nullement limitatif, faite en relation avec les dessins annexés, sur lesquels :

- la Fig. 1 est une vue en coupe longitudinale schématique d'un dispositif amortisseur de vibrations mis en place sur un câble de commande mécanique ; et

- les Fig. 2 et 3 sont des vues montrant les étapes principales de mise en place du dispositif de la Fig. 1 sur le câble de commande mécanique.

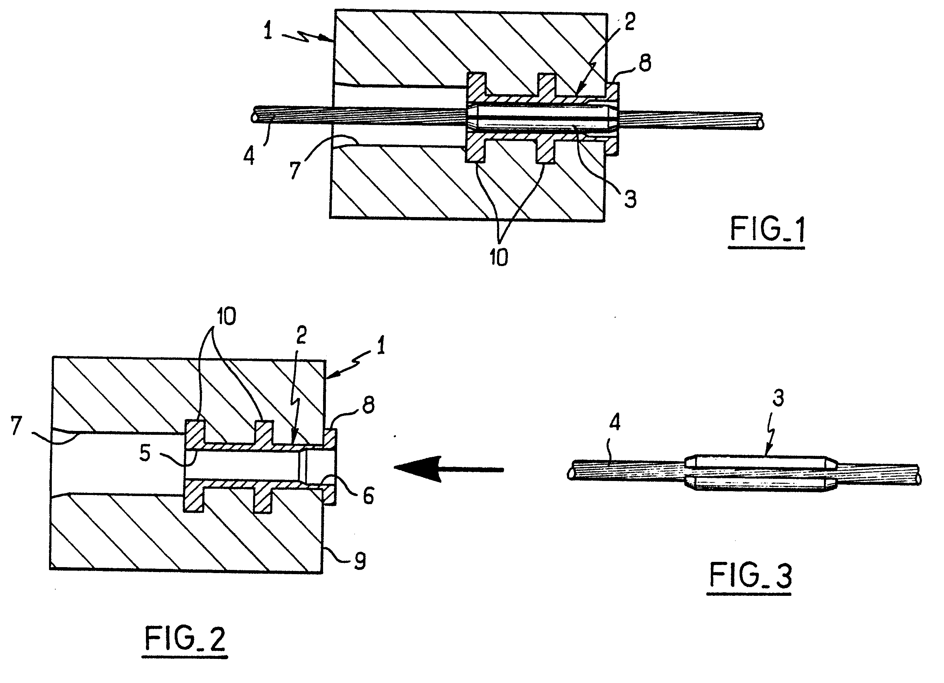

Comme on le voit sur les dessins, le dispositif amortisseur de vibrations selon l'invention comprend généralement une masse pesante 1 pourvue intérieurement d'un insert tubulaire 2 et un élément tubulaire élastique 3. L'élément tubulaire élastique 3 est fendu longitudinalement de façon à permettre des variations de ses diamètres externe et interne, les extrémités axialement opposées de l'élément tubulaire étant avantageusement biseautées pour faciliter son introduction dans l'insert tubulaire 2, comme le verra plus avant. Pour une commande mécanique déterminée, par exemple un câble guipé 4 tel que représenté sur les dessins, l'élément tubulaire élastique 3 est sélectionné de façon que son diamètre interne au repos corresponde sensiblement au diamètre externe du câble 4. L'insert tubulaire associé 2 comporte un alésage central 5 s'étendant sur une partie de sa longueur et de diamètre interne légèrement inférieur au diamètre externe de l'élément tubulaire 3 mis en place sur le câble 4. L'alésage 5 se termine, à une extrémité de l'insert 2, par une ouverture d'entrée de diamètre élargi 6 facilitant l'insertion du câble 4 pourvu préalablement de son élément tubulaire élastique 3, comme représenté sur les Fig. 3 et 2.

Le corps pesant 1 présente une allure générale de révolution choisie en fonction des paramètres propres au type de commande mécanique considérée et à son environnement particulier. Typiquement, le corps pesant 1 est réalisé en plomb ou en alliage de plomb et peut présenter une masse comprise entre 50 et 500 grammes. Le corps pesant 1 est formé autour de l'insert 2 de façon que l'extension axiale de l'insert soit comprise entre environ untiers et environ la moitié de l'extension axiale totale du corps pesant 1. Le corps pesant 1 est ainsi formé en ménageant intérieurement un passage central 7 prolongeant l'alésage 5 de l'insert 2 et de diamètre supérieur au diamètre de l'alésage 5 . Pour garantir une bonne solidarisation entre le corps pesant 1 et l'insert 2 ce dernier comporte,à une de ses extrémités, une collerette faisant saillie radialement vers l'extérieur 8 plaquée en appui contre la face d'extrémité adjacente 9 du corps pesant 1,et des parties en saillies s'étendant radialement vers l'extérieur 10 destinées à être noyées dans le matériau du corps pesant 1. Dans un mode de réalisation particulier, les parties en saillies 10 sont constituées par au moins d eux collerettes faisant saillie radialement vers l'extérieur et pourvues de pans à la façon des écrous.

La mise en place sur le tronçon de commande mécanique 4 du dispositif selon l'invention s'effectue comme suit : l'élément tubulaire élastique 3 est tout d'abord mis en place, par exemple inséré, de préférence légèrement à force,sur le tronçon de commande mécanique 4 dans la position requise. L'ensemble du tronçon 4  et de son élément tubulaire élastique 3 sont alors introduits par l'ouverture d'accès 6 dans l'ensemble constitué du corps pesant 1 et de l'insert tubulaire 2. En pénétrant dans l'alésage 5 de l'insert 2, l'élément tubulaire élastique est comprimé radialement sur le tronçon 4, à la façon d'un sertissage, les efforts de réaction du tronçon 4 garantissant une solidarisation parfaite entre le tronçon 4 et l'élément tubulaire 3, d'une part, ainsi qu'entre ce dernier et l'insert 2, et donc entre le tronçon 4 et le corps pesant 1. L'insert tubulaire 2 est réalisé typiquement en acier,de sorte que les efforts de solidarisation ou de sertissage sur le tronçon 4 de commande mécanique ne sont pas transmis au matériau relativement tendre du corps pesant 1. Ce dernier étant, par ailleurs, fermement solidarisé à l'insert 2 au moyen des parties en saillie 10, lors de la mise en oeuvre ultérieure de la commande mécanique l'ensemble du dispositif amortisseur de vibrations suivra les déplacements du tronçon 4 sans provoquer de risques de désolidarisation entre ce dernier et la masse du

- 4 -

0176376

corps pesant 1. L'interface de solidarisation entre le tronçon 4 et la masse du corps pesant 1, constituée par la longueur de l'alésage 5 et celle de l'élément tubulaire élastique 3, étant relativement importante, l'impédance de la commande mécanique équipée du dispositif amortisseur de vibrations est considérablement modifiée sans nécessiter de surcroît de masse pour le corps pesant 1. Le dispositif amortisseur de vibrations selon l'invention se révèle particulièrement efficace pour des commandes mécaniques à câble, même si le câble est guipé avec un revêtement de polyamide.

Quoique la présente invention ait été décrite en relation avec un mode de réalisation particulier, elle ne s'en trouve pas limitée mais est au contraire susceptible de modifications et de variantes qui apparaîtront à l'homme de l'Art.

REVENDICATIONS

1. Dispositif amortisseur de vibrations pour commande mécanique, notamment de véhicule automobile, comportant un élément allongé transmetteur d'effort entre un organe d'actionnement et un organe actionné, présentant un tronçon non guidé (4), caractérisé en ce qu'il comprend un corps pesant (1) présentant un passage central traversant (7,5) défini partiellement par un insert tubulaire (2) intégré au corps pesant, et un élément tubulaire élastique fendu longitudinalement (3), l'ensemble du dispositif amortisseur (1, 2, 3) étant monté sur le tronçon non guidé (4) de la commande mécanique avec l'élément tubulaire élastique (3) interposé à force entre la périphérie externe du tronçon (4) et l'insert (2).

2. Dispositif selon la revendication 1, caractérisé en ce que l'insert (2) comporte un alésage central (5) s'étendant sur une partie de sa longueur et de diamètre interne légèrement inférieur au diamètre externe de l'élément tubulaire élastique (3) enfilé sur le tronçon (4).

3. Dispositif selon la revendication 2, caractérisé en ce que l'alésage (5) se termine par une ouverture d'entrée (6) de diamètre élargi.

4. Dispositif selon l'une des revendications 1 à 3, caractérisé en ce que l'insert (2) comporte des parties en saillie extérieures (10) noyées dans le matériau du corps pesant (1).

5. Dispositif selon la revendication 4, caractérisé en ce que les parties en saillie extérieures sont constituées par au moins une collerette à pans (10).

6. Dispositif selon l'une des revendications 1 à 5, caractérisé en ce que l'insert (2) comporte une collerette d'extrémité (8) en appui contre une face d'extrémité (9) du corps pesant (1).

7. Dispositif selon l'une des revendications 1 à 6, caractérisé en ce que le passage central traversant comprend une partie (7) formée centralement dans le corps pesant (1) et de dimension transversale intérieure supérieure au diamètre de l'alésage (5) de l'insert (2).

8. Dispositif selon l'une des revendications précédentes, caractérisé en ce que le corps pesant (1) est en plomb.

9. Dispositif selon l'une des revendications précédentes, caractérisé en ce que l'insert (2) est réalisé en acier.

FIG_1

FIG_2

FIG_3

# RAPPORT DE RECHERCHE EUROPEENNE

Office européen
des brevets

Numero de la demande

EP 85 40 1532

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl 4) |
|---|---|---|---|
| A | US-A-4 281 753 (TOYOTA)<br>* Colonne 3, lignes 8-18; figures 1,2 * | 1 | F 16 F 7/10 |
| | --- | | |
| A,D | FR-A-2 358 290 (B.M.W.) | . | |
| | ----- | | |

DOMAINES TECHNIQUES RECHERCHES (Int. Cl 4)

F 16 F
F 16 G
B 60 K
F 16 D
F 16 C

Le présent rapport de recherche a été établi pour toutes les revendications

| Lieu de la recherche<br>LA HAYE | Date d'achèvement de la recherche<br>11-12-1985 | Examinateur<br>BARON C. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82